# EUROPEAN PATENT APPLICATION

(11) **EP 2 857 293 A1**
(43) Date of publication of application: **08.04.2015**
(21) Application number: 14185112.1
(22) Date of filing: 17.09.2014
(51) Int. Cl.: B62D 43/04

(54) **A device for raising and lowering a spare wheel of a vehicle**

(30) Priority: 07.10.2013 IT TO20130811
(71) Applicant: Otelli Riccardo di Otelli Carlo & C. S.r.l., 10040 Leini (Torino) (IT)
(72) Inventor: Otelli, Carlo, I-10040 Leinì (Torino) (IT); Tarabuso, Mario, I-10040 Leinì (Torino) (IT)
(74) Representative: Marchitelli, Mauro

(57) **Abstract**

A device for raising and lowering a spare wheel (12) of a vehicle, comprising:
- a flexible cable (44) movable between a raised wheel position and a lowered wheel position,
- a control device (40) operable to move the flexible cable (44) between said raised wheel and lowered wheel positions,
- a stationary plate (32) intended to be fixed to the vehicle structure, and
- a movable plate (62) connected to one end of said flexible cable (44) and intended to be fixed by screws (74) to the hub (20) of the spare wheel (12), wherein the movable plate (62) abuts against the stationary plate (32) in said raised wheel position.

## Description

### TEXT OF THE DESCRIPTION

### Field of the invention

The present invention relates to a device for raising and lowering a spare wheel of a vehicle.

### Description of the prior art

In many cases, the spare wheel of a vehicle is positioned outside the vehicle, under the lower horizontal wall of the luggage compartment. In these cases, the vehicle is usually equipped with a device that allows raising and lowering of the spare wheel.

The Italian patent no. 1379609 describes a device for raising and lowering the spare wheel of a vehicle, comprising a flexible cable having a coupling member at one end, shaped so as to engage a central hole of the wheel rim. The flexible cable is controlled by an actuation device that allows the movement of the spare wheel between a raised position and a lowered position. In the raised position, the sidewall of the tire of the wheel is compressed against the lower horizontal wall of the vehicle.

A drawback of the device described in Italian patent no. 1379609 is that the wheel is only held in a stable manner when the tire sidewall is compressed against the wall of the vehicle. If the tire sidewall is not compressed against the wall of the vehicle, the wheel is simply hung from the cable and is susceptible to swinging during the movement of the vehicle.

A vehicle model can often be equipped with wheels of different sizes. The spare tire of a vehicle model can therefore have heights that vary considerably. The device according to the prior art must be configured for a particular wheel width and is not suitable for wheels with different widths from that for which the device has been configured. This requires a configuration or calibration of the device according to the particular size of the spare wheel of the vehicle for which is equipped.

Furthermore, when a punctured wheel is lifted, the tire sidewall is not compressed against the horizontal wall of the vehicle. In this case, the wheel is not retained in a stable manner, and during the movement of the vehicle is subjected to bumps and shaking that generate annoying noises.

### Object and summary of the invention

The object of the present invention is to provide a device for raising and lowering a spare wheel of a vehicle that is not affected by the aforesaid drawbacks.

According to the present invention, this object is achieved by a device having the characteristics forming the subject of claim 1.

The claims form an integral part of the disclosure given in relation to the invention.

### Brief description of the drawings

The present invention will now be described in detail with reference to the accompanying drawings, given purely by way of non-limiting example, wherein:

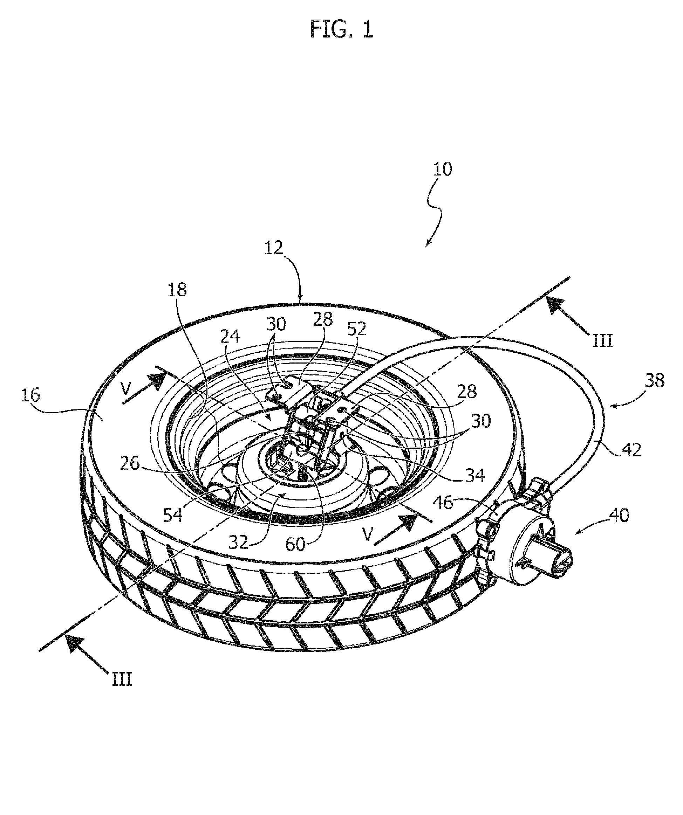

- Figure 1 is a perspective view of a device according to the present invention in the raised wheel position,
- Figure 2 is an exploded perspective view of the device of Figure 1,
- Figure 3 is a section along the line III-III of Figure 1,
- Figure 4 is an enlarged section of the part indicated by the arrow IV in Figure 3, and
- Figure 5 is a section along the line V-V of Figure 1.

### Detailed description of the invention

With reference to the drawings, numeral 10 indicates a device for raising and lowering a spare wheel 12 of a vehicle. The spare wheel 12 comprises a tire 16 and a rim 18 having a central hub 20. The hub 20 of the wheel 12 is provided with holes 22 that serve for fixing the wheel 12 to the hub of the vehicle.

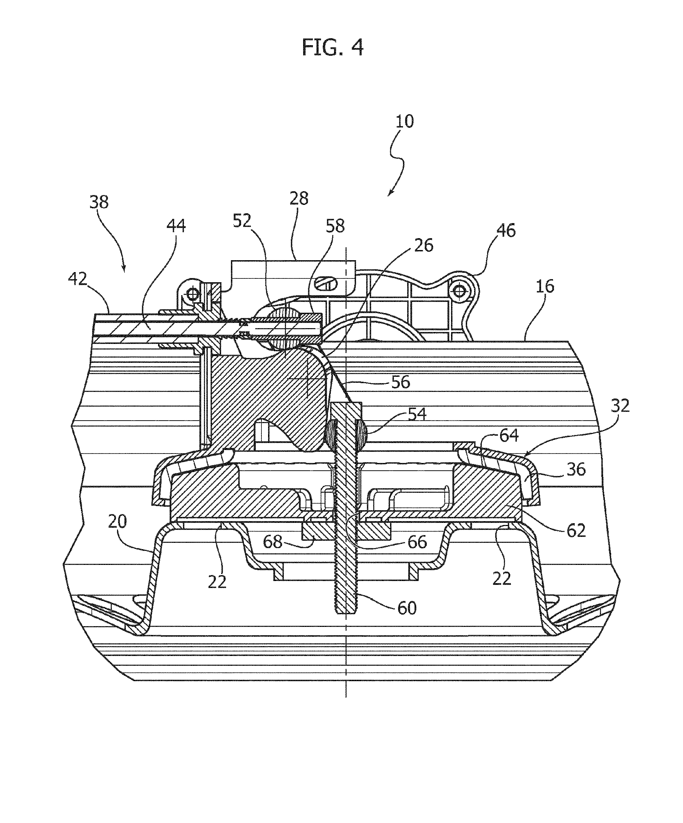

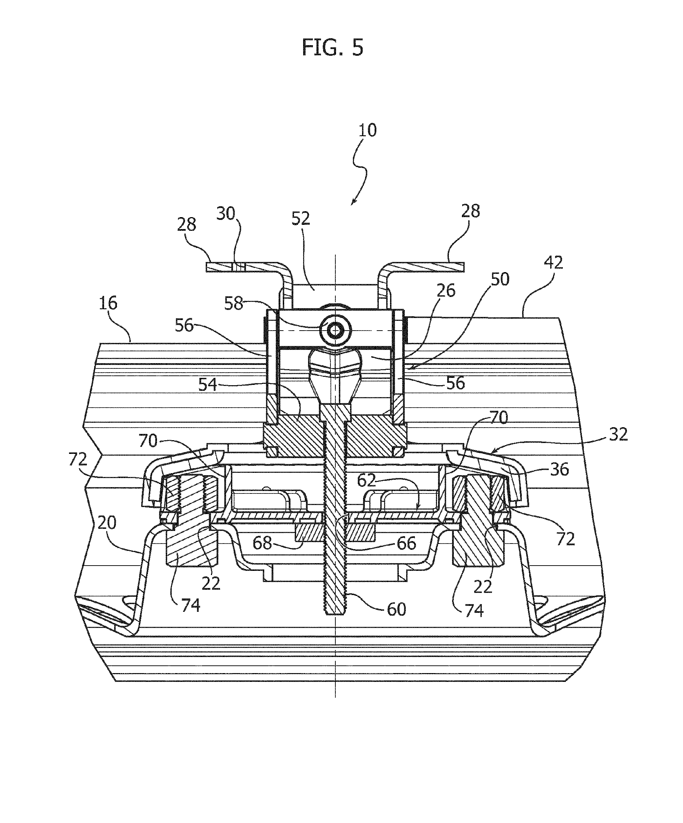

The raising/lowering device 10 comprises a stationary bracket 24 intended to be fixed to the vehicle structure. The stationary bracket 24 comprises a metallic body 34 including a deflection member 26 and two wings 28 that serve for fixing the stationary bracket 24 to the vehicle structure. The wings 28 may be provided with holes 30 for mounting screws (not shown). The stationary bracket 24 comprises an annular crown-shaped stationary plate 32, preferably formed of metal. The stationary plate 32 is fixed to or integral with the metal body 34 carrying the deflection member 26 and the fixing wings 28. As is visible in greater detail in Figures 4 and 5, the stationary plate 32 can be provided with a layer of soft plastic material 36 applied, for example, by means of co-molding, on a lower surface of the stationary plate 32.

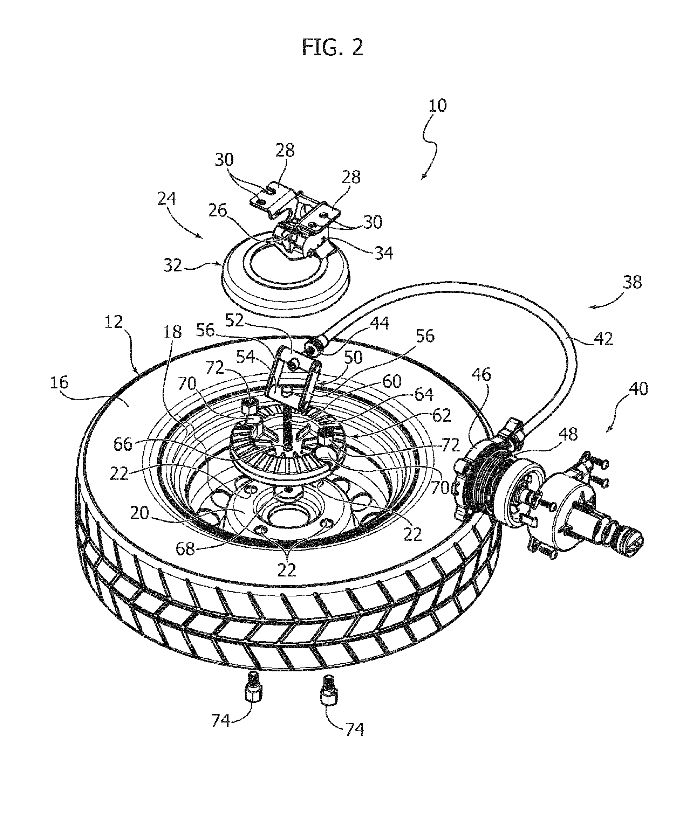

The raising/lowering device 10 comprises a Bowden transmission member 38 connected to a control device 40. The Bowden transmission member 38 comprises an outer sheath 42 and a flexible cable 44 that slides within the sheath 42. The flexible cable 44 is movable between an extended position corresponding to the lowered wheel position and a retracted position corresponding to the raised wheel position. The control device 40 is intended to be fixed to the vehicle structure and comprises a stationary flange 46 carrying a pulley 48 (Figure 2) on which the flexible cable 44 is wound in the retracted position. The pulley 48 is driven in rotation by means of a gear transmission mechanism that can be manually operated by a key or by an electric motor. The constructive details of the control device 40 are not illustrated in detail since they fall outside the scope of the present invention.

A coupling member 50 is connected to one end of the flexible cable 44 opposite to the control device 40. The coupling member 50 preferably comprises an upper pin 52 and a lower pin 54 parallel to each other. The ends of the pins 52, 54 are carried by two parallel side plates 56. The upper pin 52 has a central through-hole through which a terminal element 58 extends, fixed to the corresponding end of the flexible cable 44. Preferably, the lower pin 54 is free to oscillate around its own axis with respect to the side plates 56. The lower pin 54 has a through-hole through which a screw 60 extends, located centrally between the side plates 56.

The raising/lowering device 10 comprises a movable plate 62 connected to the flexible cable 44 and intended to be fixed to the wheel 12. With particular reference to Figure 4, the movable plate 62 has an upper surface 64 that, in the raised wheel position comes into abutment against the layer of soft plastic material 36 of the stationary plate 32. The movable plate 62 can be formed of rigid plastic material or metallic material. The movable plate 62 is disc-shaped and has a central hole 66 through which the screw 60 extends. The screw 60 engages a threaded hole of a nut 68 located on the underside of the movable plate 62. The threaded coupling between the nut 68 and the screw 60 allows adjustment of the force with which the movable plate 62 is compressed against the layer of soft plastic material 36 of the stationary plate 32.

With reference to Figures 2 and 5, the movable plate 62 has two seats 70 within which respective nuts 72 are housed. The seats 70 have respective through-holes through which respective screws 74 extend that engage the nuts 72. As is visible in Figure 5, the screws 74 extend through respective holes 22 of the hub 20 of the wheel 12 and fix the movable plate 62 to the hub 20 of the wheel 12.

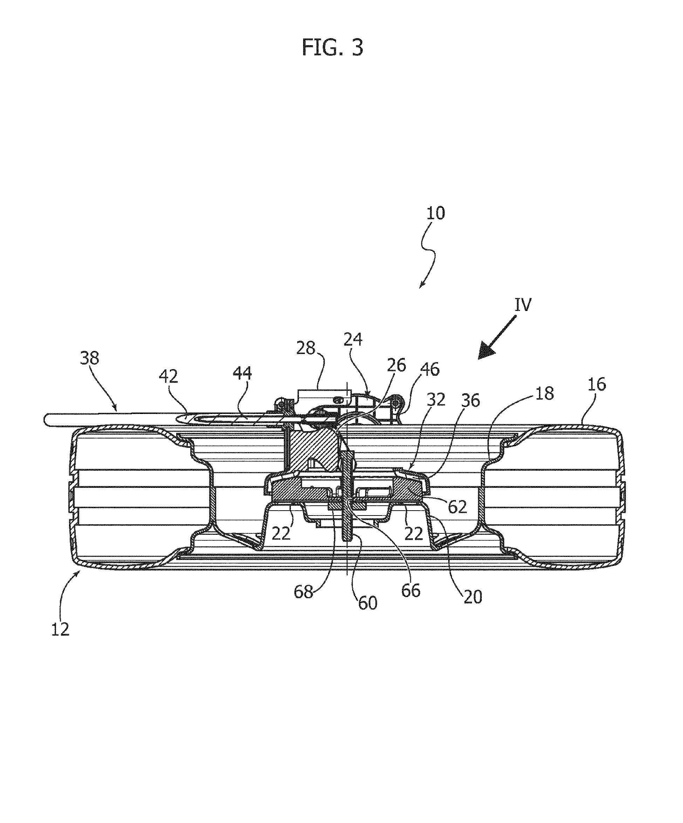

With the wheel 12 fixed to the movable plate 62 by means of the screws 74, the control device 40 allows movement of the wheel 12 between a raised position and a lowered position. With reference to Figures 3, 4 and 5, in the raised wheel position, the movable plate 62 is compressed against the stationary plate 32. In this way, the wheel 12 is stably connected to the stationary bracket 24. In the raised wheel position, it is not necessary to compress the tire 16 of the wheel 12 against a stationary surface to stably retain the wheel 12. Therefore, even when the tire 16 is punctured or deflated, the wheel 12 is retained in a stable manner by the device 10 without the wheel 12 being subject to shaking.

With reference to Figure 4, the deflection member 26 of the stationary bracket 24 has a convex curved surface on which the flexible cable 44 is deflected, essentially at 90°, during the lowering of the wheel 16. The convex curved surface of the deflection member 26 is joined to a concave surface. In the raised wheel position, the upper pin 52 of the coupling member 50 exceeds the maximum point of the convex curved surface of the deflection member 26. Therefore, the coupling member 50 is stably coupled to the deflection member 26. To lower the wheel 12, the flexible cable 44 is extracted from the control device 40. During the first step of the extraction movement of the flexible cable 44, the upper pin 52 disengages from the deflection member 26 and the wheel 12 is free to move downwards by gravity. When the wheel is completely lowered, the screws 72 that fix the wheel 12 to the movable plate 62 are unscrewed. Then, the wheel that has been replaced is fixed by means of screws 74 to the movable plate 62 and the control device 40 is operated so as to lift the wheel 12. The lifting movement of the wheel 12 ends when the movable plate 62 is compressed against the layer of soft plastic material 36 of the stationary plate 32 and the upper pin 52 of the coupling member 50 is coupled to the deflection member 26.

Of course, without prejudice to the principle of the invention, the details of construction and the embodiments may vary widely with respect to those described and illustrated, without departing from the scope of the invention as defined by the following claims.

## Claims

1. A device for raising and lowering a spare wheel (12) of a vehicle, comprising:
- a flexible cable (44) movable between a raised wheel position and a lowered wheel position, and
- a control device (40) operable to move the flexible cable (44) between said raised wheel and lowered wheel positions,
**characterized in that** it comprises:
- a stationary plate (32) intended to be fixed to the vehicle structure, and
- a movable plate (62) connected to one end of said flexible cable (44) and intended to be fixed by screws (74) to the hub (20) of the spare wheel (12), wherein the movable plate (62) abuts against the stationary plate (32) in said raised wheel position.

2. A device according to claim 1, **characterized in that** said stationary plate (32) is fixed to or integral with a deflection member (26) on which said flexible cable (44) slides during the movement between said raised wheel position and lowered wheel position.

3. A device according to claim 1, **characterized in that** it comprises a layer of soft plastic material (36) which is compressed between the movable plate (62) and the stationary plate (32) in the raised wheel position.

4. A device according to claim 1, **characterized in that** said movable plate (62) is connected to said flexible cable (44) via a screw (60) which extends through a through-hole (66) of the movable plate (62) and which engages a threaded nut (68) located on the underside of the movable plate (62).

5. A device according to claim 4, **characterized in that** said screw (60) extends through a through-hole of a lower pin (54) of a coupling member (50).

6. A device according to claim 5, **characterized in that** said coupling member (50) comprises an upper pin (52) which engages on said deflection member (26) in said raised wheel position.

7. A device according to claim 5, **characterized in that** said lower pin (54) of said coupling member (50) is freely rotatable around its own axis.
